# EUROPEAN PATENT SPECIFICATION

(11) **EP 1 847 579 B1**
(45) Date of publication and mention of the grant of the patent: **04.01.2012**
(21) Application number: 07007995.9
(22) Date of filing: 19.04.2007
(51) Int. Cl.: C09J 123/00

(54) **Hot melt adhesive for packaging applications**
Heißschmelzklebstoff für Verpackungsanwendungen
Adhésif thermofusible pour applications d'emballage

(30) Priority: 21.04.2006 US 409136
(43) Date of publication of application: 24.10.2007
(73) Proprietor: Henkel AG & Co. KGaA, 40589 Düsseldorf (DE)
(72) Inventor: Paul, Charles W., Madison New Jersey 07940 (US); Carter, Jeffrey T., Marton Cleveland TS8 9QR (GB); Morrison, Brian D., Lebanon New Jersey 08833 (US)

(56) References cited:
- EP-A- 0 800 833
- EP-A2- 0 188 901
- US-A- 4 022 727
- US-A1- 2003 229 168
- US-A1- 2004 029 980
- US-A1- 2004 082 693
- Prof. Dr. J. Falbe and Prof. Dr. M. Regitz: "Römmp Chemie Lexikon", 1997, Georg Thieme Verlag, Stuttgart-New York pages 1325-1326,

## Description

### Field of the Invention

The invention relates to low application temperature hot melt adhesives comprising saturated fatty acids.

### Background of the Invention

Hot melt adhesives are applied to a substrate when molten, then placed in contact with a second substrate. The adhesive cools and hardens to form a bond between the substrates. Hot melts are widely used for industrial adhesive applications such as product assembly and packaging. The latter include case and carton sealing.

Hot melts for packaging applications such as case and carton sealing are typically composed of a polymer, a diluent (usually a tackifier) and a wax. The wax serves several functions. Because it is low in molecular weight, it reduces viscosity. Low viscosity helps to lower application temperatures, provide cleaner processing, and also good wet out of the substrates. In addition, the wax crystallizes quickly which helps the material to harden or set quickly. Fast set speed is important for high speed production. Lastly, the wax provides temperature resistance to the final bond due to its elevated melting point.

Conventional packaging adhesives use petroleum-derived waxes such as paraffin and microcrystalline wax. The lower molecular weight of paraffin wax, makes it the primary choice for low application temperature adhesives.

Recently, due to the limited supply of paraffin wax, attention has turned to the use of natural waxes. Of the natural waxes, the lowest cost materials are based on highly hydrogenated triglycerides (Borsinger et al., US 6,890,982). The high levels of hydrogenation (low iodine values) are necessary to elevate the melting point closer to paraffin. Unfortunately, with these materials it is difficult to achieve adhesives with sufficiently high melting points and adequate set speeds. In addition, triglycerides are of much higher molecular weight than paraffin - about 890 Da for the pure tristearate of glycerin, versus 430 Da for a typical paraffin wax. The result is higher viscosity, and lower heat resistance when using highly hydrogenated triglycerides.

Saturated fatty acids have heretofore been proposed for use, and derivatives of fatty acids (such as amides) have been used extensively, as the wax component in adhesive formulations with highly polar polymers for water sensitive applications (water dispersible or biodegradable adhesives). These polar polymers are vinyl acetate / polyethylene oxide graft copolymers (Ray-Chaudhuri et al., US 3,891,584; Brady et al., EP 0 512 250 B1), poly(alkyloxazoline) (Flanagan, EP 0 212 135 B1; Sheldon et al. US 4,522,967), starch esters (Riswick, EP 0 705 895 A1), poly(vinyl pyrrolidone) and its copolymers with vinyl acetate (Colon et al., US 4,331,576 and 4,325,851), sulfonated polyesters (Blumenthal et al., US 5,750,605), and biodegradable polyether esters (Sharak et al., 5,583,187). Unsaturated fatty acids have been proposed as oil replacements in a variety of adhesive formulas (Doody et al., W0 1999/013016). However, saturated fatty acids have not been used as the base wax with conventional ethylene or propylene copolymers and tackifiers.

A need continues to exist for a substitute for paraffin wax, and for natural waxes reasonable in price, that can be used with low application temperature adhesives and that do not sacrifice heat resistance. The invention fulfills this need.

### Summary of the Invention

It has been discovered that fatty acids, particularly saturated fatty acids, can be used as the base wax component in formulating hot melt adhesives, and particularly low application temperature hot melt adhesives. When properly formulated with conventional adhesive polymers and tackifiers, saturated fatty acids such as, e.g., stearic acid, adhesives having low viscosity, long open time, and high heat resistance can be prepared.

It has been surprisingly discovered that stearic acid and higher melting saturated fatty acids such as, for example, behenic acid can function as the sole wax in packaging formulas based on conventional tackifiers and polymers.

One embodiment of the invention is directed to a hot melt adhesive comprising from about 10 to about 60 wt %, more preferably from about 20 to about 40 wt % of a base polymer, from about 10 to about 60 wt %, more preferably from about 20 to about 40 wt % of a tackifier, and from about 15 to about 55 wt %, more preferably from about 30 to about 50 wt % of a saturated fatty acid

and from 0 to about 10 wt % of crystal habit modifier, said adhesive having a viscosity of less than 2 Pas (2000 cps) at 176.7°C (350°F), a Tm greater than 55°C and a Tc greater than 35°C but less that 55°C.

Another embodiment of the invention is directed to a hot melt adhesive comprising from about 10 to about 60 wt % of a base polymer, from about 10 to about 60 wt % of a tackifier, from about 15 to about 55 wt % of a saturated fatty acid and from 0 to about 10 wt % of crystal habit modifier, said adhesive having a viscosity of less than 2 Pas (2000 cps) at 121.1°C (250°F), a Tm greater than 60°C, and a Tc greater than 40°C but less that 55°C.

Some embodiments of the adhesive of the invention comprises up to about 10 wt % of crystal habit modifier. A preferred crystal habit modifier is a fatty acid coated ultrafine precipitated calcium carbonate. Base polymers for use in the practice of the invention are ethylene and propylene homo-or copolymers or mixtures thereof, ethylene copolymers such as ethylene vinyl acetate being particularly preferred. Tackifiers include but are not limited to modified terpene resins. A terpene phenol tackifier is particularly preferred. Stearic acid is an example of saturated fatty acid that can be used in the practice of the invention.

The adhesives of the invention are particularly useful as packaging adhesives, and the invention provides cases cartons and trays and the like prepared using adhesives of the invention.

### Brief Description of the Drawing Figures

Figure 1 is a DSC scan of adhesive Sample 2.
Figure 2 is a DSC scan of adhesive Sample 3.
Figure 3 is a DSC scan overlay of Sample 2 taken from a bulk cooled specimen (solid line) and taken from a corrugated bond.
Figure 4a is a DSC scan of adhesive Sample 6 with 3 % synthetic paraffin.
Figure 4b is a DSC scan of adhesive Sample 7 with 6 % synthetic paraffin.
Figure 4c is a DSC scan of adhesive Sample 8 with 12 % synthetic paraffin.

### Detailed Description of the Invention

All references cited herein are incorporated in their entireties by reference.

Packaging hot melts rely on a wax component to lower viscosity and produce fast set (by solidification (recrystallization) of the wax). The wax also provides heat resistance (see p. 712 of C. W. Paul, Hot Melt Adhesives, in Adhesion Science and Engineering - 2, Surfaces, Chemistry and Applications, M. Chaudhury and S.V. Pocius, eds., Elsevier, New York, 2002), however, to be effective in improving the heat resistance the interaction of the wax and polymer is critical (see p. 745 of the same reference). The wax must act as more than a filler. Nonetheless the wax melting point sets the upper limit for the potential heat resistance that can be obtained from the adhesive. With polar waxes, unlike paraffin, the melting point of the wax is highly dependent on the formulation. Severe melting point depression can result from strong interactions of the wax with other ingredients or rapid cooling (which is the normal situation in case and carton sealing operations).

It has been discovered that higher melting saturated fatty acids, can function as the sole wax in packaging formulas based on conventional tackifiers and polymers. Adhesives of the invention comprise an adhesive base polymer component, a tackifier component and a wax component. The saturated fatty acid is the sole wax ingredient. Preferred for use is stearic acid.

The adhesives of the invention comprise a saturated fatty acid component. A fatty acid which is saturated, that is with minimal olefinic double bonds in the chain, is necessary to produce a high and sharp melting point. The level of unsaturation is ordinarily characterized by iodine value. Suitable values are less than 25, preferably less than 10, and most preferably less than 5. Fatty acids are obtained from the hydrolysis of triglycerides and are usually then subjected to hydrogenation to achieve the low iodine value.

Saturated fatty acids range in chain length from C4 to C22. Most common are the C18 and C16 acids. The C18 acids are preferred as these have higher melting points. A melting point above 60°C is desirable for adequate heat resistance in use. Pure C16 fatty acid (palmitic acid) melts at 62.9°C while pure C18 stearic acid melts at 69.6°C. 12-Hydroxy stearic acid (hydrogenated ricinoleic acid) melts at about 80°C, but is much more expensive than stearic acid and more prone to a severe retardation of the crystallization rate (low recrystallization temperature, Tc).

The melting point is also dependent on the purity of the fatty acid. Melting point increases with the purity of the specific acid which produces more perfect crystals. The melting point also tends to be depressed substantially by formulation into the adhesive composition. Stearic acid is most preferred because slightly impure material (which is lower in cost) can be used in a fashion such that even after formulation a melting point of above 60°C is obtained. Stearic acid has a higher melting point than paraffin (about 70°C versus about 64°C) and a lower molecular weight (280 Da versus about 430 Da).

The saturated fatty acid component will typically be present in amounts of from about 10 to about 60 wt %, more preferably from about 15 to about 55 wt %, and even more preferably from about 30 to about 50 wt %.

Polymers for use in formulating hot melt adhesives of the invention are ethylene and propylene homo- and co-polymers and mixtures thereof. Preferred for use are ethylene copolymers. Examples are ethylene copolymers with vinyl acetate, n-butyl acrylate, n-hexyl acrylate, butene, octene, acrylic acid, and methacrylic acid. Also useful are amorphous polyalpha olefins such as atactic propylene, and propylene copolymers with ethylene, butene, hexene, and octene. Preferred are copolymers of ethylene with a polar comonomer such as vinyl acetate at 5-40% by weight. Most preferred is about 28% vinyl acetate.

The adhesive compositions of this invention are preferably tackified. The tackifier component will usually be present in an amount of from about 10 wt % to about 60 wt %, more preferably from about 20 wt % to about 50 wt %, even more preferably from about 20 wt % to about 40 wt %. Various conventional tackifiers can be used in the practice of the invention are described in C. W. Paul, Hot Melt Adhesives, in Adhesion Science and Engineering - 2, Surfaces, Chemistry and Applications, M. Chaudhury and S.V. Pocius, eds., Elsevier, New York, 2002, p.711. These include natural and synthetic resins. Natural resins include rosin, rosin esters, and polyterpenes. Synthetic resins include C5 cyclic and acyclic resins, aromatic resins, C9 resins, pure monomer resins such as those based on alpha-methyl styrene, and copolymer resins of the above monomers with each other and/or phenol. Most preferred are terpene phenol resins such as those available from Arizona Chemical.

It has been found that the polarity and asymmetry of fatty acids in comparison to conventional waxes produces many benefits (long open time, strong adhesion, and tailorable melting and recrystallization behavior). However, their unique structure also makes it more difficult for these materials to crystallize in a fashion that is independent of the cooling rate. Fast cooled samples can be locked into low melting structures. These low melting structures defeat the intrinsically high melting point of many fatty acids. It has also now been discovered that some materials, referred to herein as a Crystal Habit Modifier, when added in small amounts can minimize or eliminate this problem. While the mechanism is not understood, the effect is to alter the crystal structure of the wax such that it retains a high and sharp melting point even when cooled rapidly. Additives which perform this function include certain fillers such as fatty acid coated ultra-fine precipitated calcium carbonate (Winnofil SPM from Solvay), diblock copolymers where one block is polyethylene such as AB-1 in which the second block is an amorphous polyolefin. AB-1 is in the class of materials described in D. Schwahn et al., Macromolecules, vol. 35, 2002, p. 861. These materials produce "hairy platelet" ethylenic crystals. It was found that the second block could also be polyethylene oxide, such as Unithox 380, available from Baker-Petrolite. Surprisingly, a nucleator for polypropylene, Hyperform HPN-68L, based on bicyclo[2.2.1]heptane-2,3-dicarboxylic acid, disodium salt, (1R,2R,3S,4S)-REL-, from Milliken Chemicals, was also effective. Typical hydrocarbon waxes or stearate salts, though they crystallize rapidly, were ineffective in nucleating stearic acid crystals or ensuring they were of high perfection (melting point). A preferred crystal habit modifier is ultrafine (<0.1 micron primary particles) precipitated calcium carbonate coated with fatty acids. This material is preferred since it is as effective as any other material and lowest in cost. When used, the crystal habit modifier is present in amounts of up to about 10 wt %.

The adhesives of the present invention preferably also contain a stabilizer or antioxidant. These compounds are added to protect the adhesive from degradation caused by reaction with oxygen induced by such things as heat, light, or residual catalyst from the raw materials such as the tackifying resin. Conventional antioxidants which can be used include hindered phenols, phosphites, aromatic amines, thioesters, sulfides, and the like. The adhesives of the invention will typically comprise 0 to about 3 wt % of an antioxidant.

Depending on the contemplated end use of the adhesive, other additives such as plasticizers, pigments and dyestuffs conventionally added to hot melt adhesives may be included.

The adhesives will typically and desirably be formulated for application at low temperatures, i.e., formulations that can be applied at temperatures of about 149°C (300°F) and down to about 93°C (200°F), more typically down to about 121°C (250°F).

The adhesives of the invention are low in viscosity and high in melting point, with a long open time, as characterized by a low recrystallization temperature. Adequate set speed is ensured by maintaining a recrystallization temperature above 40°C.

Preferred adhesives will have a viscosity that is less than 1.5 Pas (1500 cP) at 177°C (350°F). Since stability is compromised at higher temperatures, it is preferred that the viscosity be less than 1.5 Pa.s (1500 cP) at 149°C (300°F), more preferably at 121°C (250°F).

An adhesive having good heat resistance is needed to seal containers (cases, cartons, and the like) that are to be shipped by truck or railway. Sealed containers being transported and/or stored within a truck or rail car are exposed to very high temperatures in the summer (up to 63°C (145°F) or higher). Thus, high melting point after cooling under realistic conditions is desirable. Using a cooling rate of 20°C/min in a DSC and the same heating rate (as described below) it is desirable that the melting point (temperature of maximum endotherm) be greater than about 55°C, preferably greater than about 60°C.

Slow recrystallization rate provides long open time even at low application temperatures. However, the recrystallization temperature (temperature of maximum exotherm upon cooling at 20°C/min) must be well above room temperature (about 20°C), more preferably above 35°C, and most preferably greater than 40°C but less than 55°C.

The hot melt adhesives of the invention are particularly useful use in the packaging and converting industry, the adhesives finding particular use as case, carton, and tray forming, and as sealing adhesives. Encompassed by the invention are containers, e.g., cartons, cases, boxes, bags, trays and the like.

### EXAMPLES

### Test methods:

Viscosity was measured using a cup and bob Thermosel viscometer from Brookfield. A #27 spindle was used.

Differential scanning calorimetry (DSC) was conducted on 8-12 mg of sample using a 2920 MDSC unit from TA instruments. Samples were crimped in an aluminum pan. In all cases sampled were heated and cooled at 20°C/min. Samples were heated to 120°C, cooled at 20°C/min to -10°C - during which the recrystallization peak was recorded, and then heated at 20°C/min back to 120°C - during which the melting point was recorded.

Adhesion was evaluated by bonding double fluted corrugated cardboard with a thin bead of adhesive, allowing the bonded sample to equilibrate at the desired condition for at least 24 hrs, and pulling the bond by hand. The presence or absence of fiber tear is noted as a % of the bond area.

Heat resistance was measured by preparing an overlap bond of double fluted corrugated. The bottom side of the bond is clamped to a support. The top side hangs over the support with the bond line positioned at the edge, in a cantilever configuration. At the far end of the overhanging top side is placed a weight of 100 g which provides a cleavage stress on the bond. The bonded specimen is placed in an oven at a fixed temperature. If the bond holds for 24 hrs it is considered a passing test. Reported results are the average of three specimens.

### Materials:

Adhesive Samples were prepared using the following raw materials:
Gum Rosin, obtained from PDM Inc., having a softening point of 75°C and an acid number of 160 mgKOH/g.
Sylvares TP96, a terpene phenolic resin having softening point of 95°C and an approximate hydroxyl number of 65 mg KOH/g, available from Arizona Chemical.
Sylvares TP2040, a terpene phenolic resin, having a softening point of 118°C and an approximate hydroxyl number of 140, available from Arizona Chemical.
Ultrathene UE 665-67, an ethylene vinyl acetate copolymer containing 28% vinyl acetate by weight and having a melt index of 800, available from Equistar Chemicals LP.
Prifrac 2981, 98% pure stearic acid, available from Uniqema.
Prifrac 2979, 92% pure stearic acid, available from Uniqema.
AB-1, a diblock copolymer where one block is polyethylene and the other is a non-crystalline polyolefin block.
SasoIWax H4, a synthetic paraffin wax produced by the Fischer-Tropsch process, available from Sasolwax Americas. This material exhibits two melting points, 93 and 105°C, and has a Tc of 96°C.
NAT155, a highly hydrogenated soybean oil with an iodine value of ≤ 2, available from Marcus Oil and Chemical Co.
Cool 250, a low application temperature packaging adhesive based on conventional waxes, available from National Starch and Chemical Co.

### Example 1

Adhesives Samples 1-10 and Comparative Sample A were prepared in a single blade mixer heated to 300°F by mixing the components shown in Table 1 together until homogeneous.

### Example 2

### Effect of Tackifier Choice

Ordinarily higher softening point tackifiers provide higher heat resistance, but often at the expense of adhesion. As can be seen in Sample 1 and 2, it was found that using stearic acid as the wax, a higher softening point terpene phenolic (95°C, SylvaresTP 96) could be substituted for a lower softening point rosin (75°C, gum rosin) which improved both heat resistance and also adhesion. Use of a the higher softening point tackifier also raised the melting point of the wax in the formula from 58°C to 63°C.

### Example 3

### Effect of Crystal Habit Modifier

It was unexpectedly discovered that some materials alter the crystal structure of the wax such that it retained a high and sharp melting point even when cooled rapidly. One such material is a diblock copolymer where one end is polyethylene.

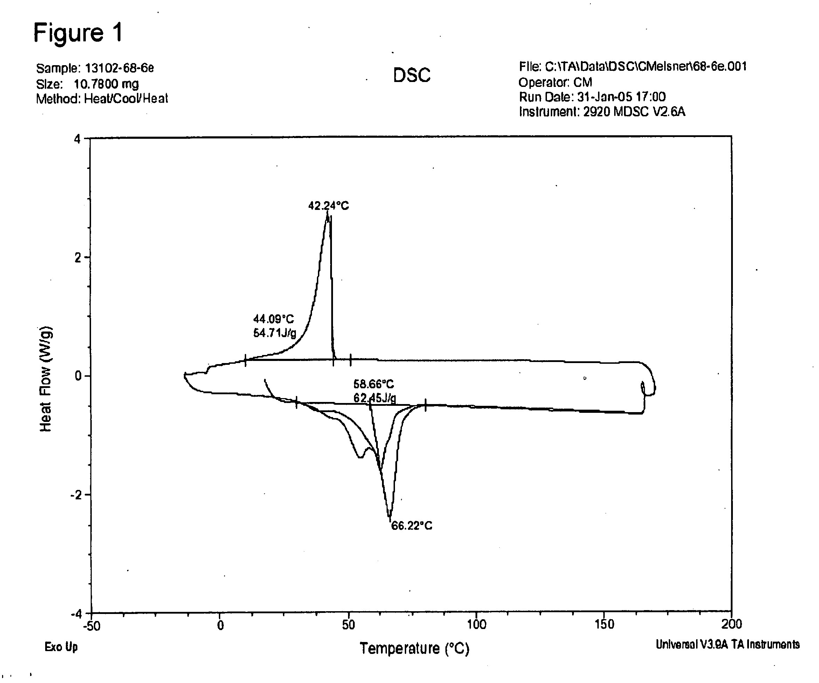

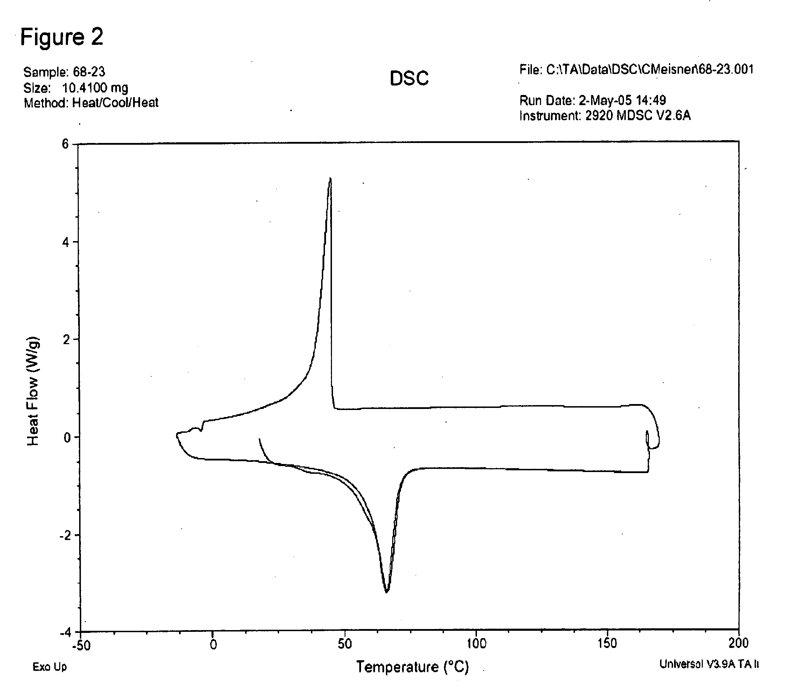

A crystal habit modifier, AB-1, was used in the formulation of Sample 3. Without AB-1 (see Sample 2 and Figure 1), fast cooling (20°C/min) produced a lower melting shoulder. The Fig. 1 DSC scan of the Sample 2 adhesive shows the heat, cool, and reheat cycles. The asmade sample cooled very slowly since it was a 100g container of adhesive. Thus the intial melting point is quite high (about 66°C). Upon cooling at 20°C/min the recrystallization peak is seen at 42°C. Upon reheating at 20°C/min it was observed that the material has two melting peaks, one at 55°C and the other at about 63°C. From the data set forth in Table 2, it can be seen that the addition of the AB-1 crystal habit modifier (Sample 3 and Figure 2) increased both heat resistance and adhesion. The Fig. 2 DSC scan of the Sample 3 adhesive shows a single high melting point (66°C) whether cooled slowly in bulk or at 20°C/min. The recrystallization temperature increased slightly (from 42C° to 45°C).

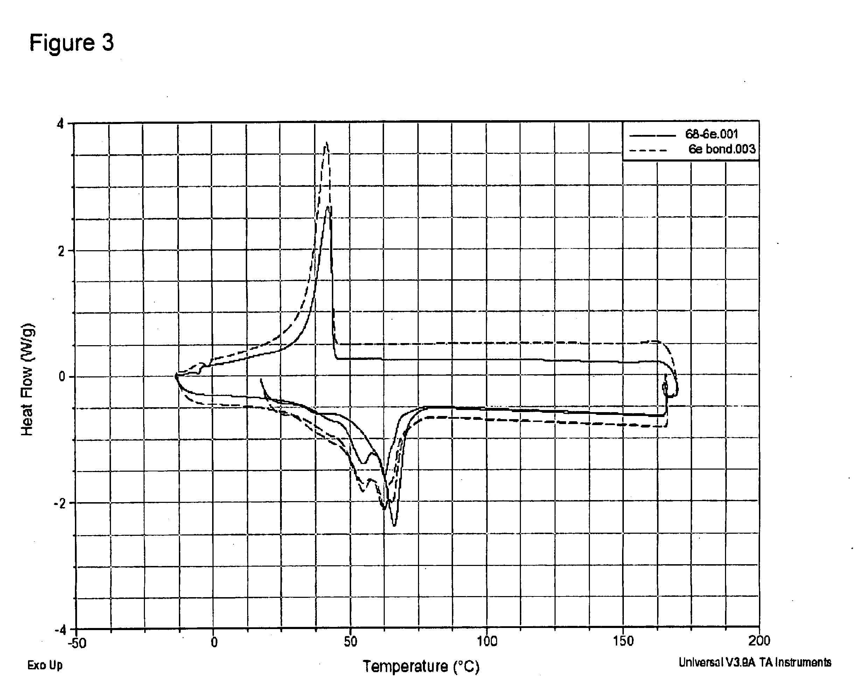

A piece of Sample 2 adhesive was cut from a corrugated bond. The DSC scan results on the bonded sample is shown in Fig. 3 and were similar to the fast cooled material indicating that bonding is a fast cooling process. The lower melting point is therefore a real issue in bonded structures.

### Example 4

### Importance of Uniform Chain Length

Higher heat resistance was obtained with higher purity stearic acid (compare Sample 3 (98% purity) with Sample 4 (92% purity)). Raising the softening point and phenol content of a portion of the tackifier used was able to compensate and regain the heat resistance while still using the lower purity stearic acid (Sample 5). Lower purity reduces the cost of the stearic acid.

### Example 5

### Cystal Habit Modifiers

Since temperatures during shipping of cases and cartons can reach slightly above 60°C for up to several hours as material is shipped through the warmer regions of the United States (see International Safe Transit Association Temperature Study, July 2002, available at www.ista.org) numerous materials were explored for their potential to avoid significant low melting material when cooled at fast speeds.

To a master batch of Sample 10 was added 1-5% of a variety of materials. If effective at 5%, some materials were also tried at 1%. The criteria for effectiveness was the absence of a secondary maximum below 65°C (as seen without a suitable modifier in Figure 1). Most preferred is no secondary maximum below 65°C and no significant low melting tail. A significant tail is one with an area of more than 15% of the total when comparing samples cooled fast (20°C/min) to those cooled slowly (1°C/min). The low melting tail is the area of the melting curve below the peak that is outside the area of the slow cooled sample's peak.

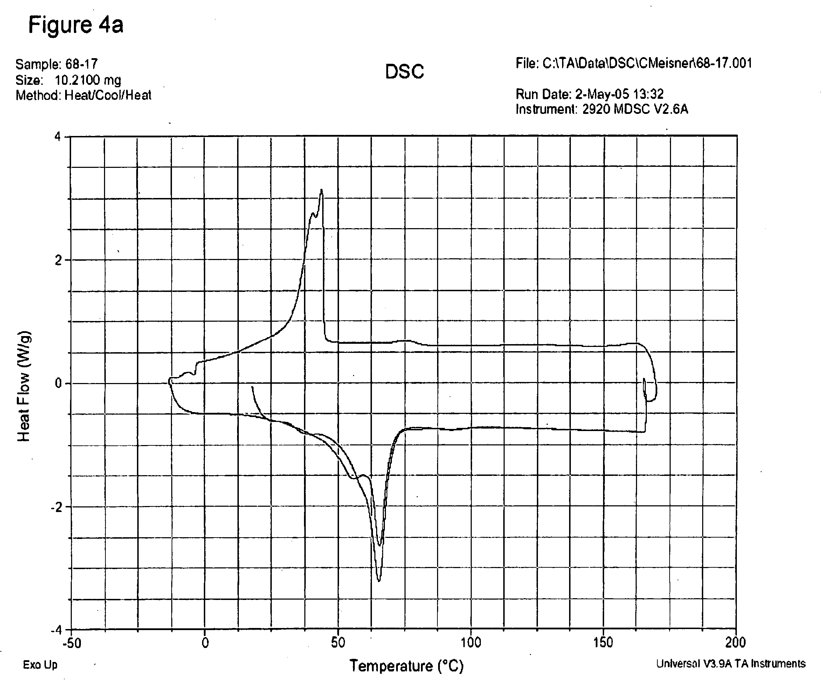

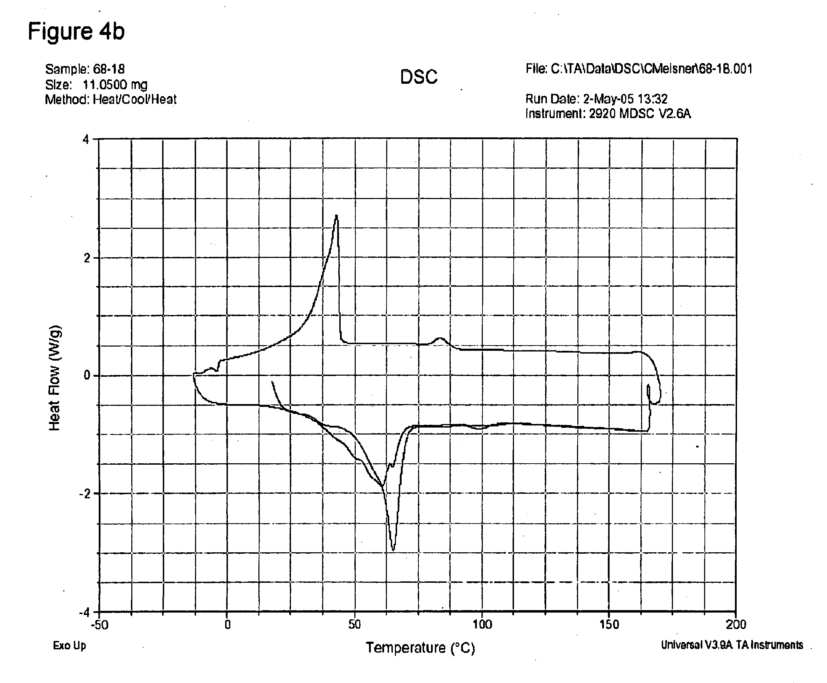

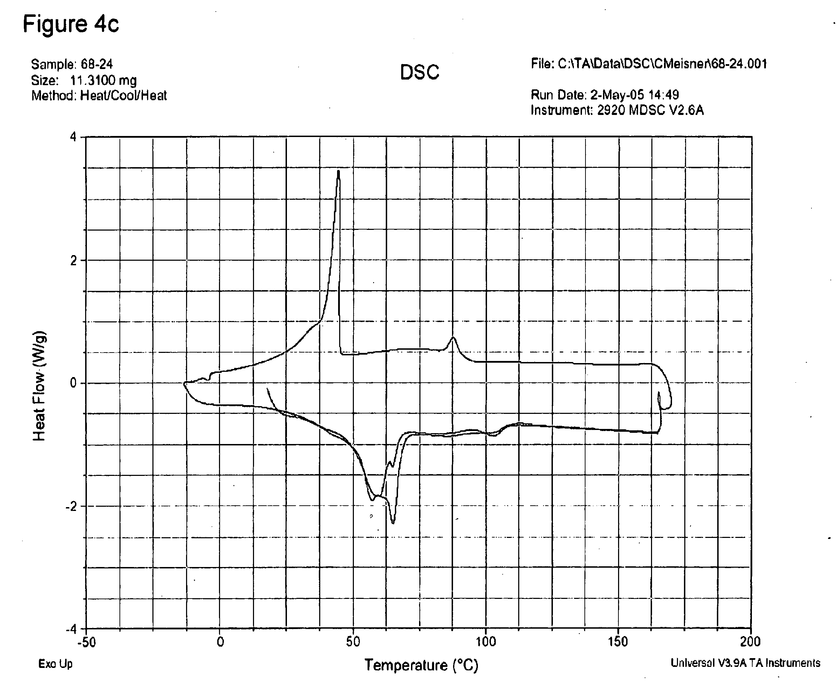

A surprising variety of materials were effective, ranging from inorganic particles (Sample 11, coated with fatty acid as a dispersing aid), block copolymers where one end is polyethylene and the other is an amorphous polyolefin (Samples 3 and 5) or a crystallizable ethylene oxide chain (Sample 13), to organic salts designed to nucleate polypropylene (Sample 12). Surprisingly, adding higher melting stearate salts (such as the eutectic mixture of Ca and Zn stearate - Synpro 1580, see Sample 9), or a conventional synthetic paraffin wax produced a pronounced low melting phase (see Samples 6-8 and Figs. 4a-c) and a corresponding drop in heat resistance (see Table 2). Adhesion was also reduced, particularly when stearic acid was combined with synthetic paraffins (Samples 6-8).

### Example 6

### Comparison to Triglyceride-Based Waxes

Sample 5 and Comparative Sample A compare identical formulas except for the choice of wax. The stearic acid-based formula (Sample 5) was not only much lower in viscosity, but also exhibited a much higher melting point (65°C vs. 48°C), and a recrystallization temperature in the optimal range (40-55°C). While the melting point of the highly hydrogenated triglyceride is close to stearic acid in the pure state (for example the melting points of the as-received NAT155 and Prifrac 2979 are 67.7°C and 71.4°C respectively) upon formulation and/or fast cooling (20°C/min) the triglyceride forms low melting crystals. The triglyceride-wax melts lower and recrystallizes at too low a temperature, which makes the set speed very slow, particularly in warm environments such as may exist during the summer months in many manufacturing facilities.

### Example 7

### Comparison to Current Low Temperature Adhesives Based on Petroleum Wax

Cool 250 is a high performance, low application temperature adhesive. The adhesive is designed to be applied at 121°C (250°F). Cool 250 was compared to Sample 3 on an automated bond maker and tester. Both adhesives were applied in bead form to single-fluted corrugated cardboard at 121°C (250°F). Using the same adhesive add-on, the open times of the adhesives were compared. The open time is the time that can elapse after applying the adhesive to one surface before bonding it to the second substrate. Beyond the adhesive's "open time" a poor bond is formed (no fiber tear of the corrugated once the adhesive has fully set). At too long an open time the adhesive will have begun to crystallize before bonding and this produces a poor bond. Inadequate adhesive open time is a recurrent issue with lower application temperature adhesives because they carry less heat to the substrate and therefore begin to recrystallize sooner. The commercial adhesive Cool 250 exhibits an open time under these conditions of 4-5 sec. The stearic acid based formula of Sample 3 exhibits an open time of 20-25 seconds. This long open time provides for a robust application process despite the low application temperature and is believed to be due to the lower recrystallization temperature of the stearic acid (45°C) in Sample 3 vs. the petroleum-derived wax in Cool 250 (57°C).

**Table 1**

| | | **Samples** | | | | | | | | | | | |
|---|---|---|---|---|---|---|---|---|---|---|---|---|---|
| **Raw Material** | **Trade Name** | **1** | **2** | **3** | **4** | **5** | **Com. A** | **6** | **7** | **8** | **9** | **10** | **Cool 250** |
| Stearic Acid | Prifrac 2981 | 40 | 40 | 40 | | | | 37 | 34 | . 34 | 35 | | |
| Stearic Acid | Prifrac 2979 | | | | 40 | 40 | | | | | | 40 | |
| Hydrogenated Soybean Oil | NAT 155 | | | | | | 40 | | | | | | |
| Synthetic Paraffin | SasolWax H4 | | | | | | | 3 | 6 | 12 | | | |
| Ca/Zn Stearate | SynPro 1580 | | | | | | | | | | 5 | | |
| Gum Rosin | | 30 | | | | | | | | | | | |
| Terpene Phenolic | Sylvares TP96 | | 30 | 30 | 30 | 20 | 20 | 30 | 30 | 27 | 30 | 20 | |
| Terpene Phenolic | Sylvares TP2040 | | | | | 10 | 10 | | | | | 10 | |
| EVA | Ultrathene UE 665-67 | 30 | 30 | 30 | 30 | 30 | 30 | 3D | 30 | 30 | 30 | 30 | |
| AB-1 | | | | 5 | 5 | 5 | 5 | | | | | | |
| | | | | | | | | | | | | | |
| Adhesion (%fiber tear) | Room T | 85 | 92 | 100 | 95 | 93 | | 83 | 47 | 0 | 82 | | 95 |
| | 40°F | 0 | 17 | 95 | 93 | 92 | | 10 | 0 | 0 | 82 | | 100 |
| | | | | | | | | | | | | | |
| Heat Stress (100g, 24 hrs) | 120° F | fail | pass | | | | | | | | | | pass |
| | 130° F | | fail | pass | fail | pass | | fall | fail | fail | fall | | pass |
| | 135° F | | | fail | fail (>5 hrs) | fail (>Shrr.) | | | | | | | fail (<5 hrs) |
| | | | | | | | | | | | | | |
| Viscosity at 250°F (cP) | | | | | | 950 | 1180 | | | | | | 1100 |
| Tm(°C) | | 58 | 63 | 66 | | 65 | 48 | 65 | 65 | 64 | 55 | 65 | 63 |
| Tc (°C) | | 36 | 42 | 45 | | 44 | 35 | 43 | 45 | 43 | 44,41 | 41 | 57 |

**Table 2**

| Sample | Supplier | Compound | Composition | Physical State at Room Temp. | Peak Melting Below 65°C? | Highest Peak Tm (°C) | Primary Tc (°C) | Additive Level (%) |
|---|---|---|---|---|---|---|---|---|
| 10 | | none | | | yes 55, 62 | 65 | 41.1 | 0 |
| 5 | | AB-1 | polyethylene / amorphous polyolefin diblock | grease like | no | 65 (5%) | 43.6 (5%) | 1,5 |
| 11 | Solvay | Winnofil SPM | PCC coated with fatty acids | powder | no | 65(1%) | 44.5(1%) | 1,5 |
| | | | | | | | | |
| | Unlqema | Span 60 | sorbitan monostearate | solid | yes, 62,55 | 66 | 41.8 | 1 |
| | Uniqema | Span 65 | sorbitan tristearate | solid | yes 55, 62 | 66 | 41.8 | 1 |
| | | | | | | | | |
| | Honeywell | A-C 573P | ethylene maleic anhydride | solid | yes,55 | 66 | 43.9 | 5 |
| | Honeywell | A-C 645P | Oxidized Polyethylene Copolymer | solid | yes,55 | 66 | 44.2 | 5 |
| | Honeywell | A-C 656 | Oxidized Polyethylene Homopolymer | solid | yes,55 | 66 | 44.6 | 5 |
| | Honeywell | A-C 6702 | Oxidized Polyethylene Homopolymer | grease like | yes,55 | 66 | 41.1 | 5 |
| | Honeywell | AClyn 201 | Ca-lonomer | solid | yes,55 | 66 | 43.7 | 5 |
| | Honeywell | AClyn 285P | Na-lonamer | solid | | | | |
| | Honeywell | AClyn 295 | Zn-ionomer | solid | | | | |
| | Honeywell | AClyn 246 | Mg-lonomer | solid | yes,55 | 65 | 43 | 5 |
| | | | | | | | | |
| 12 | Milliken | Hyperform HPN-68L | bicylic bicarboxylate, sodium salt | solid | no | 65 | 49.7,44.6 | 0 |
| | | | | | | | | |
| 13 | Baker-Petrolite | Unithox 380 | EIEO block copolymer (80% EO) | solid | no | 66 (1%) | 45.0(1%) | 1,5 |
| | Baker-Petrolite | Unithox 350 | EIEO block copolymer (50% EO) | solid | no (tail) | 65 | 41.1 | 0 |
| | Baker-Petrolite | Unithox 420 | EIEO block copolymer (20% EO) | solid | yes, 55 | 66 | 41.1 | 0 |
| | Baker-Petrolite | Unilin 350 | linear aliphatic alcohol (127 OH#) | solid | no (tall) | 65 | 41.4 | 0 |
| | Baker-Petrolite | Unicid 350 | linear mono-carboxylic acid | solid | no (tall) | 64 | 41.7 | 0 |
| | Baker-Petrolite | Petrolite CA-11 | urethane of oxidixed PE wax | solid | yes, 55 | 66 | 40.4 | 0 |
| | Baker-Petrolite | Petrolite C-400 | Li salt of oxidized PE | solid | yes, 55 | 65 | 44.9 | 0 |
| | | | | | | | | |
| | | | | | no | 63 | 57 | 0 |
| 3 | | AB-1 | polyethylene / amorphous polyolefin diblock | grease like | no | 66 | 45 | 5 |
| 6 | Sasol | SasolWax H4 | Synthetic paraffin | solid | yes, 53 | 65 | 43 | 3 |
| 7 | Sasol | SasolWax H5 | Synthetic paraffin | solid | yes, 58 | 65 | 44.5 | 6 |
| 8 | Sasol | SasolWax H6 | Synthetic paraffin | solid | yes.58 | 64 | 42.8 | 12 |
| 9 | Ferro | Synpro 1580 | Ca/Zn Stearate | solid | yes,55 | 55 | 43.7,41.4 | 5 |

## Claims

1. A hot melt adhesive comprising an adhesive base polymer component, a tackifier component and a wax component, said adhesive containing from about 10 to about 60 wt % of an ethylene or propylene homo- or co-polymer or mixtures thereof, from about 10 to about 60 wt % of a tackifier, from about 15 to about 55 wt % of a saturated fatty acid as sole wax component and from 0 to about 10 wt % of crystal habit modifier, said adhesive having a viscosity of less than 2 Pa.s (2000 cps) at 176.7°C (350°F), a Tm greater than 55°C, and a Tc greater than 35°C but less than 55°C.

2. The adhesive of claim 1 comprising from about 20 to about 40 wt % of an ethylene or propylene homo- or co-polymer, from about 20 to about 40 wt % of a tackifier, from about 30 to about 55 wt % of a saturated fatty acid and a crystal habit modifier, said modifier being present in amounts up to about 10 wt %.

3. The adhesive of claim 1 having a viscosity of less than 2 Pa.s (2000 cps) at 121.1°C (250°F), a Tm greater than 60°C and a Tc greater than 40°C but less than 55°C.

4. The adhesive of claim 2 which has a viscosity of less than 2 Pa.s (2000 cps) at 121.1°C (250°F), a Tm greater than 60°C and a Tc greater than 40°C but less than 55°C.

5. The adhesive of claim 1 comprising from about 20 to about 40 wt % of an ethylene copolymer, from about 20 to 40 wt % of a terpene phenol tackifier, and 30 to about 50 wt % of stearic acid, said adhesive having a viscosity of less than 2 Pa.s (2000 cps) at 121.1°C (250°F), a Tm greater than 60°C and a Tc greater than 40°C but less than 55°C.

6. The adhesive of claim 2 comprising from about 20 to about 40 wt % of a ethylene copolymer, from about 20 to 40 wt % of a terpene phenol tackifier, 30 to about 50 wt % of stearic acid, and up to 10 wt % of a crystal habit modifier; wherein the crystal habit modifier is an ultrafine precipitated calcium carbonate, a block or graft copolymer where at least one block is polyethylene, or a nucleator for polypropylene; said adhesive having a viscosity of less than 2 Pa.s (2000 cps) at 121.1°C (250°F), a Tm greater than 60°C and a Tc greater than 40°C but less than 55°C.

7. The adhesive of claim 1 comprising from about 20 to about 40 wt % of an ethylene copolymer, from about 20 to 40 wt % of a tackifier, and from about 30 to about 50 wt % of stearic acid.

8. The adhesive of claim 7 having a viscosity of less than 2 Pa.s (2000 cps) at 121.1°C (250°F), a Tm greater than 60°C, and a Tc greater than 40°C but less than 55°C.

9. The adhesive of claim 4 comprising from about 20 to about 40 wt % of an ethylene copolymer, from about 20 to 40 wt % of a tackifier, and from about 30 to about 50 wt % of stearic acid.

10. The adhesive of claim 6 wherein the crystal habit modifier is an ultrafine precipitated calcium carbonate coated with a fatty acid, a diblock copolymer where at least one block is polyethylene and the other is polyethylene oxide or an amorphous polyolefin, or a nucleator based on bicyclo[2.2.1]heptane-2,3-dicarboxylic acid, disodium salt, (1R,2R,3S,4S)-REL-; said adhesive having a viscosity of less than 2 Pa.s (2000 cps) at 121.1°C (250°F), a Tm greater than 60°C and a Tc greater than 40°C but less than 55°C.

## Patentansprüche

1. Schmelzklebstoff, der eine Klebstoff-Basispolymerkomponente, eine Klebrigmacherkomponente und eine Wachskomponente umfasst, wobei der Klebstoff von etwa 10 bis etwa 60 Gew.-% eines Ethylen- oder Propylen-Homopolymers oder -Copolymers oder von Gemischen davon, von etwa 10 bis etwa 60 Gew.-% eines Klebrigmachers, von etwa 15 bis etwa 55 Gew.-% einer gesättigten Fettsäure als einzige Wachskomponente und von 0 bis etwa 10 Gew.-% eines Kristallhabitusmodifikators enthält, wobei der Klebstoff eine Viskosität von weniger als 2 Pa.s (2000 cps) bei 176,7 °C (350 °F), eine Tm von mehr als 55 °C und eine Tc von mehr als 35 °C, aber weniger als 55 °C aufweist.

2. Klebstoff nach Anspruch 1, der von etwa 20 bis etwa 40 Gew.-% eines Ethylen- oder Propylen-Homopolymers oder -Copolymers, von etwa 20 bis etwa 40 Gew.-% eines Klebrigmachers, von etwa 30 bis etwa 55 Gew.-% einer gesättigten Fettsäure und einen Kristallhabitusmodifikator umfasst, wobei der Modifikator in Mengen von bis zu etwa 10 Gew.-% vorliegt.

3. Klebstoff nach Anspruch 1 mit einer Viskosität von weniger als 2 Pa.s (2000 cps) bei 121,1 °C (250 °F), einer Tm von mehr als 60 °C und einer Tc von mehr als 40 °C, aber weniger als 55 °C.

4. Klebstoff nach Anspruch 2, der eine Viskosität von weniger als 2 Pa.s (2000 cps) bei 121,1 °C (250 °F), eine Tm von mehr als 60 °C und eine Tc von mehr als 40 °C, aber weniger als 55 °C aufweist.

5. Klebstoff nach Anspruch 1, der von etwa 20 bis etwa 40 Gew.-% eines Ethylen-Copolymers, von etwa 20 bis 40 Gew.-% eines Terpenphenol-Klebrigmachers und 30 bis etwa 50 Gew.-% Stearinsäure umfasst, wobei der Klebstoff eine Viskosität von weniger als 2 Pa.s (2000 cps) bei 121,1 °C (250 °F), eine Tm von mehr als 60 °C und eine Tc von mehr als 40 °C, aber weniger als 55 °C aufweist.

6. Klebstoff nach Anspruch 2, der von etwa 20 bis etwa 40 Gew.-% eines Ethylen-Copolymers, von etwa 20 bis 40 Gew.-% eines Terpenphenol-Klebrigmachers, 30 bis etwa 50 Gew.-% Stearinsäure und bis zu 10 Gew.-% eines Kristallhabitusmodifikators umfasst; wobei der Kristallhabitusmodifikator ein ultrafein gefälltes Calciumcarbonat, ein Blockpolymer oder Pfropfpolymer, wobei mindestens ein Block Polyethylen ist, oder ein Keimbildner für Polypropylen ist; wobei der Klebstoff eine Viskosität von weniger als 2 Pa.s (2000 cps) bei 121,1 °C (250 °F), eine Tm von mehr als 60 °C und eine Tc von mehr als 40 °C, aber weniger als 55 °C aufweist.

7. Klebstoff nach Anspruch 1, der von etwa 20 bis etwa 40 Gew.-% eines Ethylen-Copolymers, von etwa 20 bis 40 Gew.-% eines Klebrigmachers und von etwa 30 bis etwa 50 Gew.-% Stearinsäure umfasst.

8. Klebstoff nach Anspruch 7 mit einer Viskosität von weniger als 2 Pa.s (2000 cps) bei 121,1 °C (250 °F), einer Tm von mehr als 60 °C und einer Tc von mehr als 40 °C, aber weniger als 55 °C.

9. Klebstoff nach Anspruch 4, der von etwa 20 bis etwa 40 Gew.-% eines Ethylen-Copolymers, von etwa 20 bis 40 Gew.-% eines Klebrigmachers und von etwa 30 bis etwa 50 Gew.-% Stearinsäure umfasst.

10. Klebstoff nach Anspruch 6, wobei der Kristallhabitusmodifikator ein ultrafein ausgefälltes Calciumcarbonat, das mit einer Fettsäure überzogen ist, ein Diblockcopolymer, wobei mindestens ein Block Polyethylen ist und der andere Polyethylenoxid oder ein amorphes Polyolefin ist, oder ein Keimbildner auf Basis von (1R,2R,3S,4S)-REL.-Bicyclo[2.2.1]heptan-2,3-dicarbonsäure-Dinatriumsalz ist; wobei der Klebstoff eine Viskosität von weniger als 2 Pa.s (2000 cps) bei 121,1 °C (250 °F), eine Tm von mehr als 60 °C und eine Tc von mehr als 40 °C, aber weniger als 55 °C aufweist.

## Revendications

1. Adhésif thermofusible comprenant un composant polymère de base d'adhésif, un composant agent collant et un composant cire, ledit adhésif contenant d'environ 10 à environ 60% en poids d'un homo ou co-polymère d'éthylène ou de propylène ou des mélanges de ceux-ci, d'environ 10 à environ 60% en poids d'un agent collant, d'environ 15 à environ 55% en poids d'un acide gras saturé en tant que composant cire seul et de 0 à environ 10% en poids d'un modificateur d'habitus cristallin, ledit adhésif ayant une viscosité de moins de 2 Pa.s (2 000 cps) à 176,7°C (350°F), une Tm supérieure à 55°C, et une Tc supérieure à 35°C mais inférieure à 55°C.

2. Adhésif selon la revendication 1 comprenant d'environ 20 à environ 40% en poids d'un homo ou co-polymère d'éthylène ou de propylène, d'environ 20 à environ 40% en poids d'un agent collant, d'environ 30 à environ 55% en poids d'un acide gras saturé et un modificateur d'habitus cristallin, ledit modificateur étant présent dans des quantités allant jusqu'à environ 10% en poids.

3. Adhésif selon la revendication 1 ayant une viscosité de moins de 2 Pa.s (2 000 cps) à 121,1 °C (250°F), une Tm supérieure à 60°C et une Tc supérieure à 40°C mais inférieure à 55°C.

4. Adhésif selon la revendication 2 qui a une viscosité de moins de 2 Pa.s (2 000 cps) à 121,1 °C (250°F), une Tm supérieure à 60°C et une Tc supérieure à 40°C mais inférieure à 55°C.

5. Adhésif selon la revendication 1 comprenant d'environ 20 à environ 40% en poids d'un copolymère d'éthylène, d'environ 20 à 40% en poids d'un agent collant phénol terpénique, et 30 à environ 50% en poids d'acide stéarique, ledit adhésif ayant une viscosité de moins de 2 Pa.s (2 000 cps) à 121,1°C (250°F), une Tm supérieure à 60°C et une Tc supérieure à 40°C mais inférieure à 55°C.

6. Adhésif selon la revendication 2 comprenant d'environ 20 à environ 40% en poids d'un copolymère d'éthylène, d'environ 20 à 40% en poids d'un agent collant phénol terpénique, 30 à environ 50% en poids d'acide stéarique, et jusqu'à 10% en poids d'un modificateur d'habitus cristallin ; dans lequel le modificateur d'habitus cristallin est un carbonate de calcium précipité ultrafin, un copolymère séquencé ou greffé où au moins un bloc est un polyéthylène, ou un agent de nucléation pour le polypropylène ; ledit adhésif ayant une viscosité de moins de 2 Pa.s (2 000 cps ) à 121,1°C (250°F), une Tm supérieure à 60°C et une Tc supérieure à 40°C mais inférieure à 55°C.

7. Adhésif selon la revendication 1 comprenant d'environ 20 à environ 40% en poids d'un copolymère d'éthylène, d'environ 20 à 40% en poids d'un agent collant, et d'environ 30 à environ 50% en poids d'acide stéarique.

8. Adhésif selon la revendication 7 ayant une viscosité de moins de 2 Pa.s (2 000 cps) à 121,1°C (250°F), une Tm supérieure à 60°C, et une Tc supérieure à 40°C mais inférieure à 55°C.

9. Adhésif selon la revendication 4 comprenant d'environ 20 à environ 40% en poids d'un copolymère d'éthylène, d'environ 20 à 40% en poids d'un agent collant, et d'environ 30 à environ 50% en poids d'acide stéarique.

10. Adhésif selon la revendication 6 dans lequel le modificateur d'habitus cristallin est un carbonate de calcium précipité ultrafin recouvert d'un acide gras, un copolymère dibloc où au moins un bloc est un polyéthylène et l'autre est un oxyde de polyéthylène ou une polyoléfine amorphe, ou un agent de nucléation basé sur l'acide bicyclo[2.2.1]heptane-2,3- dicarboxylique, sel disodique, (1 R,2R,3S,4S)-REL- ; ledit adhésif ayant une viscosité de moins de 2 Pa.s (2 000 cps) à 121,1°C (250°F), une Tm supérieure à 60°C et une Tc supérieure à 40°C mais inférieure à 55°C.
